# EUROPEAN PATENT APPLICATION

(11) **EP 1 795 789 A2**
(43) Date of publication of application: **13.06.2007**
(21) Application number: 06256204.6
(22) Date of filing: 05.12.2006
(51) Int. Cl.: F16K 5/02, F16K 27/06

(54) **Reinforced gas valve stem**

(30) Priority: 06.12.2005 US 294717
(71) Applicant: Lincoln Brass Works, Inc., Waynesboro, TN 38485 (US)
(72) Inventor: Jones, James Dean, Linden, Tennessee 37096 (US); Ferlin, William Joseph, Franklin, Tennessee 37064 (US); Butler, James Ellis, Waynesboro, Tennessee 38485 (US)
(74) Representative: Stuttard, Garry Philip

(57) **Abstract**

A reinforced gas valve assembly (20) having a valve stem (28) secured to a main valve body (22) adjacent a valve member (30). The valve includes a retaining cover plate (42) configured to secure the valve stem (28) to the valve body (22) and a reinforcement member (56) coupled to both the valve stem (28) and the retaining cover plate (42) for restricting radial movement of the valve stem (28).

## Description

### FIELD

The present disclosure relates to valve assemblies, and more particularly, to a reinforced valve assembly for use with gaseous fluids.

### BACKGROUND AND SUMMARY

It is generally well known in the art to have a gas valve assembly that includes a combination of a valve body, a valve member, and a rotatable valve stem to control the flow of a fuel, or other gas, from an inlet source to an outlet. Contemporary gas valve assemblies are increasing in popularity and are being used with various appliances, such as gas ranges, outdoor barbeques, camp stoves, etc. The valve stems are typically made of brass or steel and currently have between a 0.25 and 0.35 inch outside diameter valve stem.

In some gas valve assemblies, the valve stem can have an undesirable wobble movement between the valve stem and the valve body. While it may not be unsafe, wobbling movement of the stem is undesired as it may negatively impact product appearance and a consumer's impression of quality. The present teachings provide a cost effective reinforced gas valve assembly having increased valve stem rigidity.

In various embodiments, the present disclosure provides a gas valve assembly including a main valve body having a first port, a second port, and a fluid passage providing fluid communication between the first and second ports. A valve member is disposed within the main valve body and configured to selectively permit fluid flow between the first and second ports. A valve stem is secured to the main valve body adjacent the valve member and configured for coordinated rotational movement with the valve member. A reinforcement member is coupled to the valve assembly and configured for restricting radial movement of the valve stem.

The present disclosure also provides a method of restricting radial movement of a valve stem of a gas valve assembly. The method includes aligning a valve stem with a valve member disposed in a cavity of a main valve body. The valve stem is secured to the valve body with a retaining cover plate having an upstanding collar and the valve stem is configured for coordinated rotational movement with the valve member. The method further includes extending a fulcrum point of the valve stem using a reinforcement member operable to restrict radial movement of the valve stem.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustration purposes only and are not intended to limit the scope of the present disclosure in any way.

FIG. 1 is a perspective view of a fully assembled reinforced gas valve assembly according to the principles of the present disclosure;

FIG. 2 is a cross-sectional view of the reinforced gas valve assembly taken along line 2-2 of FIG. 1;

FIG. 3 is a partial enlarged view of the of FIG. 2;

FIG. 4 is a front plan view of a reinforcement bushing according to the principles of the present disclosure; and

FIG. 5 is a cross-sectional view of the reinforcement bushing taken along line 5-5 of Figure 4.

### DETAILED DESCRIPTION

The following description is merely exemplary in nature and is not intended to limit the present disclosure, application, or uses. It should be understood that throughout the drawings, corresponding reference numerals indicate like or corresponding parts and features.

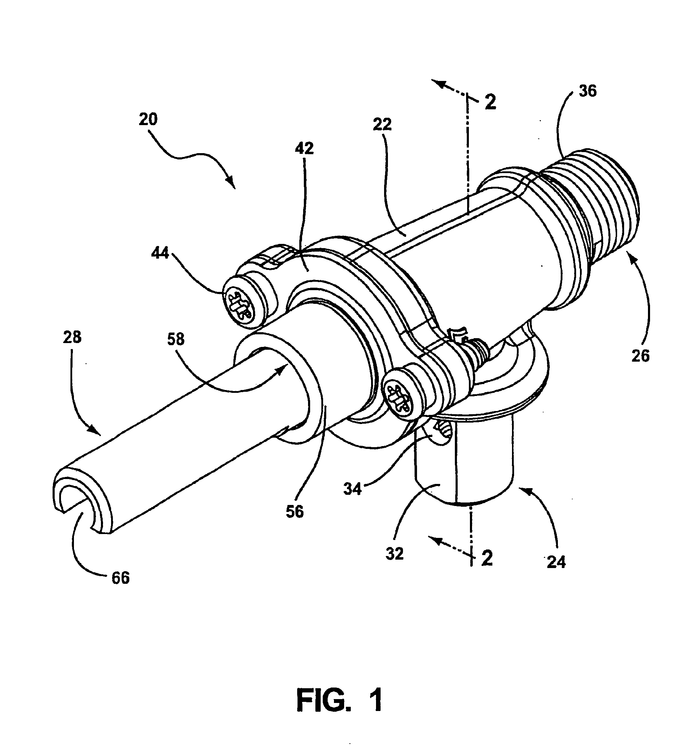

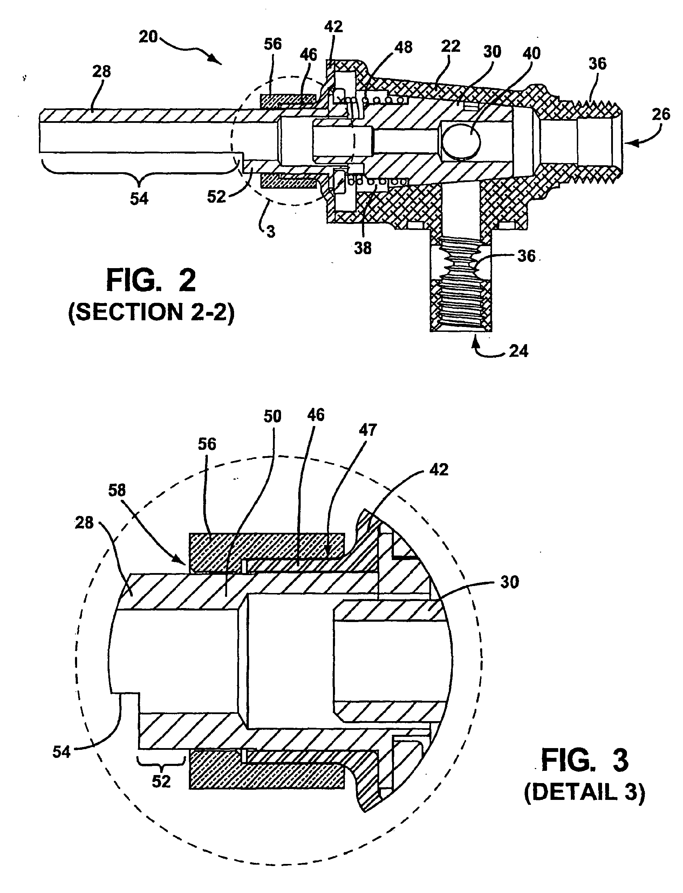

Typical gas supply systems include a plurality of gas valves, manifolds, air/fuel mixing tubes, and burner units. Referring to Figures 1 and 2, a reinforced gas valve assembly is shown in accordance with the present disclosure and is designated by the reference number 20. The gas valve assembly 20 includes a main valve body 22 having a first port 24, or inlet, a second port 26, or outlet, and a fluid passage enabling fluid communication between the first and second ports 24, 26. A valve stem 28 is provided for a user to selectively rotate a valve member 30 that controls the gradient fluid flow between fully on and off positions.

In various embodiments, the first and second ports 24, 26 may be integral extensions of the main valve body 22. The main valve body 22 is preferably made of a metal material, such as brass, steel, or aluminum, by appropriate casting, forging, or other forming methods. It should be appreciated that the main valve body 22 may be configured differently to accommodate various types of inlet 24 and outlet 26 configurations as well as mounting arrangements. For example, while the figures depict the inlet 24 and outlet 26 ports generally perpendicular to one another, it is contemplated that their spatial relationship may be parallel to one another and may include a wide array of alternate variations.

Various ports, passages, and bores may be formed in the main valve body 22 using casting or drilling operations known to one skilled in the art. The ports may be shaped having flattened regions 32 and provided with apertures 34 as desired. As illustrated, certain ports and other areas may be provided with one or more threaded portions 36 for connection to various manifolds, gas tubing, and other connecting devices. Appropriate recessed areas may also be provided to house gaskets or other sealing members (not shown).

A fully assembled reinforced gas valve assembly 20 will preferably include a detachable control knob (not shown) to rotate the valve stem 28. The main valve body 22 may provide a bore 38, or cavity, for receiving a valve member 30 or other valve components. The valve components may include any of several valve components as known in the art operable to selectively control fluid flow between the first and second ports 24, 26. It is appreciated by one skilled in the art, however, that the use of an annular tapered component may provide numerous advantages as compared to other valve designs. In particular, there is added flexibility in providing a desired control as well as simple manufacture. Additionally, if the valve member 30 wears over time, it will continue to provide an adequate seal between various ports disposed in the bore 38. Thus, in various embodiments, the bore 38 may be configured to retain an annular plug type valve member that provides selective fluid communication between the first and second ports 24, 26. A plug type valve member preferably has a body portion that is generally cylindrical or conical in shape such that the exterior of the body portion matches the interior of the bore 38 in the valve body 22. Typically, the valve member 30 includes at least one radially extending aperture 40, configured for positioning in selective alignment and providing fluid communication to the second port 26.

Once assembled, the valve stem 28 is disposed adjacent to the valve member 30 for coordinated rotational movement with the valve member 30 within the bore 38 of the main valve body 22. As shown in Figures 1-3, the valve stem 28 is secured in place with a retaining cover plate 42 that clamps to the main valve body 22 with mechanical fasteners, such as screws 44. In various embodiments, the retaining cover plate 42 includes a collar, or an upstanding shoulder portion 46, for added support and to minimize radial movement of the valve stem 28. The valve stem 28 is generally hollow and defines an opening extending an entire length of the stem 28. In various embodiments, the valve stem 28 is brass or zinc coated cold rolled steel. In certain embodiments, the valve stem comprises stainless steel. Depending on the material selection, it may be desirable to heat treat the valve stem 28, and other components of the assembly, for additional strength.

In various embodiments, a biasing member such as a spring 48 may be provided in the bore 38 of the main valve body 22 to coordinate with the valve stem 28 such that the valve stem 28 must be depressed prior to rotating the valve member 30 out from the off position. A suitable spring seat or stop means, such as a locking clip, may be provided so as to not over compress the spring. The valve stem 28 may be provided with a base section having at least one tab-type locking mechanism. It should be appreciated that the interior of the retaining cover plate 42 may be configured with numerous stops, notches, tangs, or protrusions that may limit rotation of the valve member 30, thereby allowing the valve stem 28 to be locked at different positions, such as low, medium, and high. This particular embodiment allows for multiple operating conditions by simple rotation of a valve stem 28. In this instance, the valve stem would have to be slightly depressed in order to move the valve stem from the various locked positions. For example, once a locking tab is out of a safety notch, the valve stem 28 may be freely rotated from the lowest setting to a fully open position.

In various embodiments, the valve stem has a generally circular cross-section in an area 50 adjacent to the valve body to match and correspond with the shoulder region 46 of the retaining cover plate 42. Once assembled, a portion 52 of the exposed valve stem 28 keeps the generally circular cross-section while the remainder of the valve stem 28 may define a cut-out section 54 extending a remaining length of the valve stem 28. In certain embodiments the valve stem 28 may include a flattened portion (not shown) that partially extends a length of the valve stem 28 and would be disposed at a location between the circular cross-section 52 and the cut-out section 54. In other embodiments, the entire cut-out section 54 may be flattened, and not cut-out to provide increased torque strength while still providing an anti-rotation feature to minimize any misalignment between the valve stem 28 and a control knob or optional ignition switch (not shown).

Due in part to the manufacturing process, the assembled valve stem 28 and collar 46 may have an annular space between them, which may result in radial displacement of the assembled valve stem 28 within the collar 46. This displacement may be measured by what is referred to in the industry as Full Indicator Movement (FIM). FIM is the deviation from perfect form of a part surface (e.g., the valve stem) detected by full displacement of the part on a datum axis, using a dial indicator. FIM is generally defined as the total movement of a dial indicator, or comparable measuring device, applied normal or perpendicular to a surface, and its value describes the displacement of a measured surface from a selected surface as shown on a dial indicator. By reducing an FIM tolerance, one can reduce any wobble, or radial displacement of the valve stem 28 with respect to the collar 46. A part meeting an FIM tolerance means that as the part is radially displaced, a dial indicator can be held against the surface, and the total deviation (which includes both the plus and minus deviation) cannot exceed the given number.

In various embodiments, the teachings of the present disclosure include the use of a reinforcement member, such as a cap bushing 56, which is coupled to the valve and configured for restricting radial movement of the valve stem 28, for example, by extending a fulcrum point 58 of the valve stem 28 away from the valve body 22 and reducing an average FIM tolerance. The cap bushing 56 may be coupled to at least a portion of one or both of the valve stem 28 and the collar 46 of the cover plate 42. ln various embodiments, the use of a reinforcement member reduces the average FIM tolerance of from about 0.04 inches down to an average of about 0.01 inches, or less, as measured at a distance of about 1.75 inches from the main valve body inlet using a one pound force parallel to the indicator measurement.

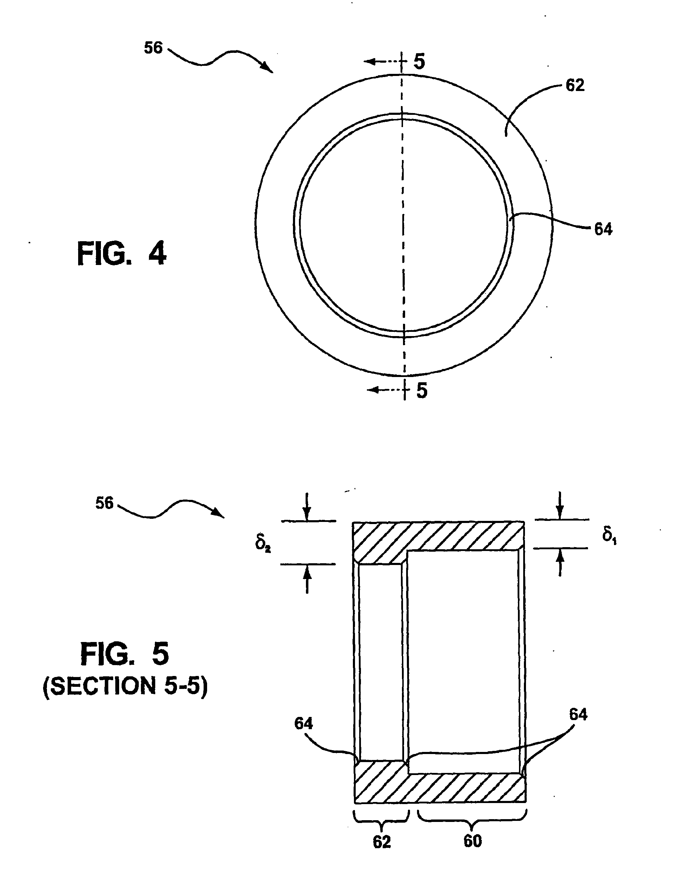

As shown in Figure 4 which illustrates a front plan view of an exemplary reinforcement member 56 and Figure 5 which is a cross-section of Figure 4 taken along the reference line 5-5, the reinforcement member 56 may generally be a cylindrical or tubular bushing having a first end or portion 60 and a second end or portion 62. In various embodiments, the first end 60 has a thickness δ₁ with a first diameter configured to mate with the collar 46 of the cover plate 42, and the second end 62 has a thickness δ₂ with a second diameter, less than the first diameter and configured to mate with the valve stem 28. Typical gas valve assemblies are provided with a valve stem having an outside diameter of between about 0.25 and 0.35 inches or less. Accordingly, the reinforcement member may have a variable wall thickness of less than about 0.2 inches, and preferably from about 0.025 to about 0.15 inches, or from about 0.035 to about 0.075 inches. As a non-limiting example as shown in Figure 5, the first portion 60 of the reinforcement member 56 may simply be of a different thickness than the second portion 62, and they may be separated by an abrupt annular wall, or alternatively with a gradient change in wall thickness. An overall length of the reinforcement member 56 may vary depending upon the end use, and the lengths and widths of the first and second portions 60, 62 may be custom sized as desired. In various embodiments, the reinforcement member has a uniform outside diameter, and the inside edges 64 may be chamfered. The reinforcement member 56 may extend a fulcrum point 58 of the valve stem 28 between about 0.02 to about 0.25 inches, and preferably between about 0.05 to about 0.15 inches, or about 0.1 inches. It should be understood that the fulcrum point 58 extension can be increased or decreased, depending on the design and selection of materials, and these variations are within the scope of the present teachings.

In various embodiments, the reinforcement member 56 may be press-fit onto the valve assembly 20. As with most press-fit installations, generally a small amount of metal may be displaced due to the compressive forces applied, thus enabling the components to fit tightly together. In various embodiments, the cover plate 42 is hardened steel and the reinforcement member 56 is made of brass, such that it is preferred that the collar 46 of the cover plate 42 displace a portion of the inside diameter of the reinforcement member 56 to form a generally permanent union. The union should be provided with enough press-fit to couple the reinforcement member 56 with the collar 46, but not too much so as to compress the internal clearance of the collar 46.

In other embodiments, the reinforcement member may be mechanically joined to the valve, for example by welding or crimping, or fastened to the valve with the use of a screw, or otherwise secured. Still other alternate methods for installing the reinforcement bushing 56 with press-fit security may involve the use of metal to metal adhesive.

In various embodiments, an optional control means may also be provided for fine-tune adjustments to a rate of fluid flow for valve assemblies that are equipped with specific flow settings, such as high and low. As is known in the art, one control means includes an adjustment plug (not shown) rotatably disposed in the valve member 30. Preferably, an adjustment feature of the plug is accessible through the aperture 66 of the valve stem 28 by using an instrument such as a thin bladed screw driver. This feature allows for adjustment of the flow through at least one of the first and second ports 24, 26.
The present disclosure also provides a method of restricting radial movement of a valve stem 28 of a gas valve assembly 20. The method includes aligning a valve stem 28 with a valve member 30 disposed in a cavity 38 of a main valve body 22. The valve stem 28 is secured to the valve body 22 with a retaining cover plate 42 having an upstanding collar 46 and the valve stem 28 is configured for coordinated rotational movement with the valve member 30. The method further includes extending a fulcrum point 58 of the valve stem 28 using a reinforcement member 56 operable to restrict radial movement of the valve stem 28 with respect to the valve assembly 20. In various embodiments, extending the fulcrum point 58 of the valve stem 28 may include securing the reinforcement member 56 over the valve stem 28 by press-fitting or mechanically fastening the reinforcement member 56 with an exterior portion 47 of the upstanding collar 46 as previously described. In various embodiments, extending the fulcrum point 58 of the valve stem lowers an average FIM tolerance of the valve stem to about 0.01 inches as measured at a distance of about 1.75 inches from the main valve body inlet using a one pound force parallel to the indicator measurement.

The description of the disclosure is merely exemplary in nature and, thus, variations that do not depart from the gist of the disclosure are intended to be within the scope of the claims. Such variations are not to be regarded as a departure from the spirit and scope of the disclosure.

## Claims

1. A valve, comprising:
a main valve body having a first port, a second port, and a fluid passage providing fluid communication between the first and second ports;
a valve member disposed within the main valve body and configured to selectively permit fluid flow between the first and second ports;
a valve stem secured to the main valve body adjacent the valve member and configured for coordinated rotational movement with the valve member; and
a reinforcement member coupled to the valve and configured for restricting radial movement of the valve stem,
wherein the reinforcement member comprises a generally tubular profile having a first end and a second end, the first end having a first inner diameter configured to mate with the valve body, and the second end having a second inner diameter less than the first inner diameter and configured to mate with the valve stem.

2. A valve according to claim 1, wherein the reinforcement member comprises a press-fit bushing.

3. A valve according to claim 1, wherein the reinforcement member is mechanically joined to the valve.

4. A valve according to claim 1, wherein the reinforcement member comprises a brass bushing.

5. A valve according to claim 1, further comprising a retaining cover plate having an upstanding collar configured to couple the valve stem to the valve member, wherein the first end of the reinforcement member is configured to mate with and be press-fitted with the upstanding collar of the cover plate.

6. A valve according to claim 1, wherein the reinforcement member has a uniform outer diameter.

7. A valve according to claim 1, wherein the reinforcement member has a wall thickness from about 0.025 to about 0.15 inches.

8. A valve according to claim 1, wherein the reinforcement member extends a fulcrum point of the valve stem such that the valve stem has an average FIM tolerance of about 0.01 inches as measured at a distance of about 1.75 inches from the main valve body.

9. A valve according to claim 1, wherein the reinforcement member extends a fulcrum point of the valve stem between about 0.05 to about 0.15 inches.

10. A gas valve assembly, comprising:
a main valve body defining a cavity, the main valve body including an inlet port and an outlet port in fluid communication, the inlet and outlet ports being continuous, integral extensions of the main valve body;
a valve member rotatably disposed within the cavity and configured to selectively adjust fluid flow between the first and second ports;
a valve stem secured to the main valve body adjacent the valve member and configured for coordinated rotating movement with the valve member;
a retaining cover plate having an upstanding collar configured to secure the valve stem to the main valve body; and
a reinforcement member coupled to both the valve stem and an exterior portion of the upstanding collar of the retaining cover plate, the reinforcement member configured to extend a fulcrum point for restricting radial movement of the valve stem.

11. A gas valve assembly according to claim 10, wherein the reinforcement member comprises a press-fit bushing.

12. A gas valve assembly according to claim 10, wherein the reinforcement member is mechanically joined to the valve assembly.

13. A gas valve assembly according to claim 10, wherein the reinforcement member has a uniform outer diameter.

14. A gas valve assembly according to claim 10, wherein the reinforcement member extends a fulcrum point of the valve stem such that the valve stem has an average FIM tolerance of about 0.01 inches as measured at a distance of about 1.75 inches from the main valve body.

15. A gas valve assembly according to claim 10, wherein the reinforcement member extends a fulcrum point of the valve stem between about 0.05 to about 0.15 inches.

16. A method of restricting radial movement of a valve stem of a gas valve assembly, comprising:
aligning a valve stem with a valve member disposed in a cavity of a main valve body;
securing the valve stem to the valve body with a retaining cover plate having an upstanding collar, the valve stem configured for coordinated rotational movement with the valve member; and
extending a fulcrum point of the valve stem with a reinforcement member.

17. A method according to claim 16, wherein the reinforcement member comprises a cap bushing and extending the fulcrum point of the valve stem comprises securing the cap bushing over the valve stem and press-fitting the cap bushing with an exterior portion of the upstanding collar.

18. A method according to claim 16, wherein the reinforcement member comprises a cap bushing and extending the fulcrum point of the valve stem comprises mechanically fastening the cap bushing over the valve stem with an exterior portion of the upstanding collar.

19. A method according to claim 16, wherein extending the fulcrum point of the valve stem lowers an average FIM tolerance of the valve stem to about 0.01 inches as measured at a distance of about 1.75 inches from the main valve body.

20. A method according to claim 16, wherein extending the fulcrum point of the valve stem includes extending the fulcrum point between about 0.05 to about 0.15 inches away from the valve.
